# EUROPEAN PATENT SPECIFICATION

(11) **EP 3 313 698 B1**
(45) Date of publication and mention of the grant of the patent: **13.05.2020**
(21) Application number: 16814806.2
(22) Date of filing: 02.06.2016
(51) Int. Cl.: B60K 37/06, H01H 25/06

(54) **START/STOPP SWITCH SYSTEM, PRIMARILY INTENDED FOR A VEHICLE**
START/STOPP-SCHALTSYSTEM, DAS PRIMÄR FÜR EIN FAHRZEUG VORGESEHEN IST
SYSTÈME DE COMMUTATEUR DE MARCHE/ARRÊT, PRINCIPALEMENT CONÇU POUR UN VÉHICULE

(30) Priority: 25.06.2015 SE 1550875
(43) Date of publication of application: 02.05.2018
(73) Proprietor: Scania CV AB, 151 87 Södertälje (SE)
(72) Inventor: ISENBERG, Lars, 151 39 Södertälje (SE); SKEPPSTRÖM, Tomas, 151 39 Södertälje (SE)
(74) Representative: Scania CV AB
(86) International application number: PCT/SE2016/050518
(87) International publication number: WO 2016/209144

(56) References cited:
- EP-A1- 0 605 324
- EP-A1- 0 974 843
- EP-A1- 1 469 428
- DE-A1-102013 208 525
- US-A- 5 977 655
- US-A1- 2005 115 757
- US-A1- 2006 096 845
- US-A1- 2007 252 681
- US-A1- 2010 052 845
- US-A1- 2010 188 192
- US-A1- 2011 025 488
- US-A1- 2011 025 488
- US-A1- 2013 037 392

## Description

### TECHNICAL ART

The present invention relates to a start/stop switch including a combined device for operating a vehicles power supply and to start/stop its engine. The invention especially concerns a keyless start/stop switch preferably intended for a heavy commercial/industrial vehicle. The invention also covers a vehicle provided with such a start/stop switch with a combined keyless device.

### TECHNICAL BACKGROUND

Engine starting switches are well known since long and have for a long time used a conventional mechanical key. Such a key can be lost, misplaced or damaged. More and more vehicle manufacturers have been changing to starting systems in the vehicles that is based on an electronic key or on a completely keyless system, so called "start and go" systems. This means that a start switch is used when the vehicle should be started or stopped and/or be powered, instead of a starting key.

In the earlier systems using a key, the key was first turned to an R-position, the "radio-position", thereafter the key was further turned to a "15-position", resulting in power to all vehicles systems as well as to the instrument lights, and after that the key was turned to the engine starting position, the "50"-position. This "50"-position was spring biased and the key automatically turned back to the "15 position" when the driver dropped/released the key.

In the keyless systems a start/stop switch is often used having a knob in the center. The problem is that when the driver only wants to use the radio or some other "15-powered" function without starting the vehicle engine, he/she cannot easily do this by using the vehicles start/stop switch. Different solutions are today used to control this power position in the car. To find out how this works on a specific car can be difficult without reading the car manual carefully.

There is a desire to limit the number of controls in a vehicle, making the locations of the controls logical to the driver as well as easy to operate. It is common to combine several functions in one unit in order to facilitate production and operating the functions. A number of switches or controls with integrated functions are therefore known.

US2005115757 discloses a keyless engine starting system including a turning shaft connected to a handle lock for locking/unlocking the vehicle. The mechanism may be rotated to different positions and is provided with a separate starting knob. The system also includes a torque limiting mechanism for the knob.

US5977655 describes a lock actuator assembly for a steering lock/ignition assembly having a two position knob for operating an ignition switch of the vehicle and for operating its steering lock mechanism. The knob is retained within a housing by a latch device until authorization by an authorization system is provided to the latch device. When authorization is received, the latch device releases the knob from the housing so that the steering lock mechanism may unlock the steering shaft and the ignition switch can be operated to start the vehicle.

US2010052845 illustrates an antitheft system for a vehicle, especially a keyless entry or smart start system including a portable device or remote control for transmitting an authentication code. The system is intended also for permitting vehicle mounted equipment to be operated, e.g. for controlling doors to be locked or unlocked, for permitting an engine to be started etc. A knob may be rotated in order to set the device in different positions, e.g. for starting the engine.

US2011/025488A1 shows a start/stop switch in the form of a knob with a centrally located button and an outer circular and rotatable ring. The centrally located button is operated to start and stop the engine, while gear change is operated through rotating the knob.

There are many other similar solutions on the market today that facilitates and speeds up the operation of the vehicle or making the vehicle safer. But it is yet not shown a start/stop switch with an integrated rotational part for controlling the different power status for the car, like the "R-function" and "15-function".

### SUMMARY OF THE INVENTION

An object of the invention is to solve the above mentioned problems and to indicate/provide a control device, a start/- stop switch, which admits manually controlling the operating modes of a vehicle in such a way that a certain desired operating mode may be activated easily and quickly by the driver.

A further object of the invention is to combine the activation of several functions in a single unit, such as in a start/stop switch.

A further object of the invention is to provide a start/stop switch with an outer part that may be rotated in order to activate different functions.

A further object of the invention is to provide a start/stop switch that does not take up more space than a conventional start/stop unit and that therefore may be possible to locate on the dashboard saving space in the vehicle.

A further object of the invention is to provide a start/stop switch that is functional to the driver, cost effective to manufacture and simple to install when manufacturing a vehicle.

These and further objects and advantages are achieved according to the invention by a device defined by the features in the characterizing parts of the independent claim 1.

The present invention is intended for all kind of vehicles, such as for heavy commercial vehicles, but can also be used for other types of vehicles and may be possible to use even in other industrial applications, where there is a need to combine several functions in one single control system or device that can be activated by a single manual movement by the driver/user and which provides a simple, quick and safe operation.

The invention comprises a start/stop switch having an inner centrally located button and an outer rotatable part/ring and including a signal generating unit. The start/stop switch is electrically/electronically connected to a power management system located e.g. in the vehicle.

When the outer part of the start/stop switch, the ring, is rotated, forward or backward (clockwise or counterclockwise), an electronic signal is generated in the signal generating unit and transferred to an electronic unit, e.g. an ECU. The electronic unit may be integrated into the start/stop switch but may also be a separate unit or integrated into the vehicle electrical system. In this electronic unit the signal is interpreted and a value, based on the signal, is determined. The value indicates the rotational angle the ring has been moved/rotated. A certain predetermined rotation angle means that the ring has been moved "one step", either forwards or backwards. If the system was set in the "0-position" from the beginning, one step forward indicates that the ring now has been moved to the "R-position", the "Radio-position", meaning that the driver will be able to listen to the radio without starting the vehicle engine. If the value of the signal, and the angle rotational position, indicates that the ring has been moved two steps the "15-position" has been reached, meaning that the electrical systems in the vehicle should be powered, such as the windscreen wipers, instrument lamps in the cabin, ventilation fans etc. If the ring is left in this position it will be possible to push the button in the center of the start/stop switch resulting in that the engine will be powered and started. The central button is spring biased and will return to its inactivated position when the driver is releasing the pressure. The engine will of course continue to run until the button once again is pressed. If the central button is pressed once again for stopping the engine the ECU will interpret this as that all systems should be turned off and the ring of the start/stop switch is inactivated. Pressing the start/stop button overrides the function of the ring. The ring has to be manually rotated again in order to activate the "R-position" or "15-position". If the system is set into the "15-system" and the driver wants to return the system to the "R-position" the ring has to be rotated backwards (counterclockwise) one step. This will generate a signal to the electronic unit resulting in that it will change its function from powering the "R-position" instead of the "15-position".

Based on the movement of the ring the electronic unit will control the function of a power management unit that in turns will control different power supply units in the vehicle. A first power supply unit controls the power to the radio while a second power supply unit controls the power to a number of other electric systems in the vehicle, such as the windscreen wipers, instrument lamps, ventilation fans etc. A third power supply unit controls the power to the engine and thus is operated by pressing the central button in the start/stop switch.

In one embodiment the ring has no physical detectable steps when rotating the ring. In another embodiment the ring may be rotated to distinct positions that may be felt by the driver when rotating the ring.

By the present invention is achieved a simple solution, using simple technology, that gives a function that is easy to understand by any driver. The solution is also very simple to use at manufacturing a vehicle as it will fit in the same place as the conventional start/stop switch.

Further features and advantages of the invention will appear from the following, more detailed, description of the invention and the accompanying drawings and further claims.

### BRIEF DESCRIPTION OF THE DRAWINGS

The invention is described below in some preferred embodiments referring to the accompanying drawings.
**Figure 1** illustrates a plan view of a simple start/stop switch, having a centrally located button and a rotatable outer ring, according to the invention.
**Figure 2** illustrates a schematic block diagram of a start/stop switch according to the invention including an input device and electronic function units.

### DESCRIPTION OF PREFERRED EMBODIMENTS

The present invention relates to a control device arranged primarily in a vehicle and in the form of start/stop switch with at least two movable parts, one centrally located button and one outer rotatable part/ring, preferably intended to be arranged on the vehicle's dashboard, and for activating the performance mode of the vehicle and the engine of the vehicle.

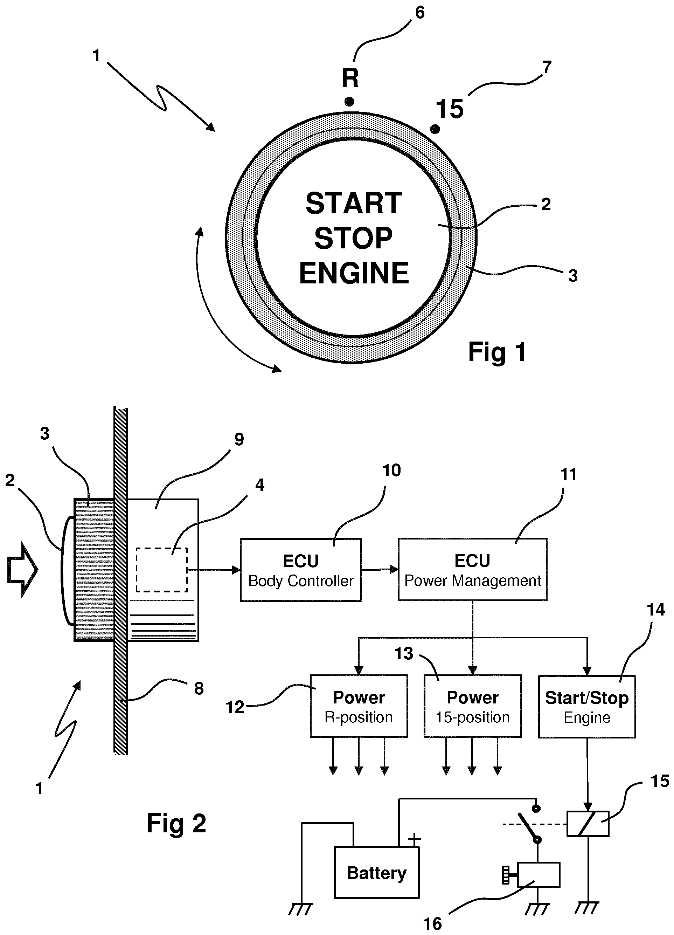

**Figure 1** illustrates a plan view of a simple controlling device 1, a start/stop switch, having a centrally located and substantially circular button 2 and a rotatable outer ring 3, surrounding the button 2. The central button 2 may be pushed into the device 1 generating a signal in a first electronic unit 4 (see figure 2). The outer ring 3 is substantially circular and is rotatable having no predetermined or fixed positions but can be rotated endlessly. When rotating this ring 3 a signal is generated and transferred to an electronic system 5 (see figure 2). The signals generated in the device 1 and its electronic unit 4 may be generated in a known manner by using optoelectronic devices, a resistance path, small switches or similar technology (not shown). When the driver operating the device 1, different positions 6,7 may light up. The first position, the "R-position" 6, may be activated by rotating the ring 3 a little bit clockwise and light up first and the "R-position" 6 and the second "15-position" 7 may be activated as the next step by rotating the ring 3 a bit further clockwise and both these positions 6,7 may be activated and light up at the same time.

When the ring 3 has been moved to the "15-position", and the electrical systems in the vehicle has been powered, such as the windscreen wipers, instrument lamps in the cabin, ventilation fans etc (not shown) it may be, in this position, possible to push the central button 2 resulting in that the engine (not shown) will be powered and started. The central button 2 has a spring back function and will return to its inactivated outer position when the driver releases his manual pressure on the button 2. The engine will of course continue to run until the button 2 once again is pressed.

**Figure 2** illustrates a schematic block diagram of a device/- system according to the invention, a start/stop switch 1 and an electronic system. The start/stop switch 1 is preferably installed on a dashboard 8 and provided with an outer part comprising the button 2 and the ring 3 and an inner part 9. The outer part comprises, as mentioned, of a centrally located and substantially circular button 2 and a rotatable outer ring 3, surrounding the button 2. The inner part 9 of the start/- stop switch 1 is preferable located behind the dashboard 8 and includes a first signal generating electronic unit 4, of known art. The electronic unit 4 is arranged to generate a signal S by means of e.g. optoelectronic components of known art. The signal S comprises preferably of pulses.
When the ring 3 of the start/stop switch 1, is rotated, forwards or backwards (clockwise or counterclockwise), an electronic signal is generated in the electronic unit 4 and this signal is transferred to a second electronic unit 10, e.g. an ECU. The electronic unit 10 may be integrated into the start/stop switch 1 but may also be a separate unit or integrated into the vehicles computer system (not shown). In this electronic unit 10 the signal is interpreted and a value, based on the signal, is determined.
Based on the mechanical movement of the ring 3 the first electronic unit 4 will transmit a signal to, and control the function of, the electronic system in the vehicle including a power management control unit 11 that in turns will control different power supply units 12-14 in the vehicle. The first power supply unit 12 is arranged to control the power to the radio, the "R-position", while a second power supply unit 13 is arranged to control the power to a number of other electric systems in the vehicle, the "15-position", such as the windscreen wipers, instrument lamps of the cabin, ventilation fans etc (not shown). A third power supply unit 14 is arranged to control the power to the engine (not shown) and thus is operated by pressing the central button 2 in the start/stop switch 1. This third power supply unit 14 may transmit a control signal to a start relay 15, which is arranged to control large currents to a starter motor 16.

The above description is primarily intended to facilitate the understanding of the invention. However the invention is of course not in any way restricted to only the disclosed embodiments, but many possibilities to modifications would be apparent to a person skilled in the art within the scope of the invention without departing from the basic idea of the invention as defined in the appended claims.

## Claims

1. Start/stop switch device (1), for powering/controlling an electronic system and engine in a vehicle, comprising:
- a centrally located pushbutton (2) to power and start the vehicle engine through control of a third power supply unit (14), when pushed, and
- an outer substantially circular and rotatable ring (3), wherein the ring (3), when rotated, is arranged to generate an electronic signal (S) within the start/stop switch device (1), the signal (S) arranged to control the electronic system (5) comprising a power management unit (11) arranged to power different power supply units (12, 13, 14) of the vehicle, the switch device (1) ***characterised by***
an electronic unit (4), integrated in the start/stop switch device (1), arranged to generate the signal (S) when the ring (3) is rotated, the signal (S) arranged to indicate the rotational angle the ring is rotated, and wherein when said signal (S) is indicating a first predetermined rotational angle it is arranged to power a first power supply unit (12) to control the power to the radio, the "R-system", and when said signal (S) is indicating a second predetermined rotational angle it is arranged to power a second power supply unit (13) to control the power to at least one other electric system in the vehicle, the "15-system".

2. Device (1) according to claim 1,
***characterised by***
that the ring (3) is arranged endlessly rotatable.

3. Device (1) according to claim 1 or 2,
***characterised by***
that the ring (3) is arranged rotatable in both directions.

4. Device (1) according to any preceding claim,
***characterised by***
that an electronic unit (10) is arranged to detect the signal (S) from the start/stop switch (1) and in turn control the power management unit (11).

5. Device (1) according to any preceding claim,
***characterised by***
that the electronic unit (10) is the vehicles ECU.

6. Device (1) according to any preceding claim,
***characterised by***
that the button (2) is spring biased.

7. Device (1) according to any preceding claim,
***characterised by***
that the power to the engine is controlled via the third power supply unit (14) and a starter relay (15).

8. Device (1) according to any preceding claim,
***characterised by***
that the electronic unit (4) is arranged to generate the signal (S) by means of optoelectronic components.

9. Device (1) according to any preceding claim,
***characterised by***
that the signal (S) comprises of pulses.

10. Vehicle **characterized in that** it is equipped with a start/stop switch device (1) according to any of the claims 1-9.

## Patentansprüche

1. Start/Stopp-Schaltvorrichtung (1) zum Speisen/Steuern eines elektronischen Systems und Motors in einem Fahrzeug, umfassend:
- einen zentral angeordneten Druckknopf (2) zum, wenn er gedrückt wird, Speisen und Starten des Fahrzeugmotors durch eine Steuerung einer dritten Stromversorgungseinheit (14), und
- einen äußeren im Wesentlichen kreisförmigen und drehbaren Ring (3), wobei der Ring (3), wenn er gedreht wird, dazu angeordnet ist, ein elektronisches Signal (S) innerhalb der Start/Stopp-Schaltvorrichtung (1) zu erzeugen, wobei das Signal (S) dazu vorgesehen ist, das elektronische System (5) zu steuern, welches eine Energiemanagementeinheit (11) aufweist, die dazu angeordnet ist, verschiedene Stromversorgungseinheiten (12, 13, 14) des Fahrzeugs zu versorgen, wobei die Schaltvorrichtung (1) **gekennzeichnet ist durch**
eine in die Start/Stopp-Schaltvorrichtung (1) integrierte elektronische Einheit (4), die dazu angeordnet ist, das Signal (S) zu erzeugen, wenn der Ring (3) gedreht wird, wobei das Signal (S) dazu vorgesehen ist, den Drehwinkel anzugeben, um den der Ring gedreht wird, und wobei dann, wenn das Signal (S) einen ersten vorbestimmten Drehwinkel angibt, es dazu vorgesehen ist, eine erste Stromversorgungseinheit (12) zu versorgen, um den Strom zu dem Radio, dem "R-System", zu steuern, und wenn das Signal (S) einen zweiten vorbestimmten Drehwinkel angibt, es dazu vorgesehen ist, eine zweite Stromversorgungseinheit (13) zu versorgen, um den Strom zu wenigstens einem weiteren elektrischen System in dem Fahrzeug, dem "15-System", zu steuern.

2. Vorrichtung (1) nach Anspruch 1,
**dadurch gekennzeichnet, dass** der Ring (3) dazu angeordnet ist, endlos drehbar zu sein.

3. Vorrichtung (1) nach Anspruch 1 oder 2,
**dadurch gekennzeichnet, dass** der Ring (3) dazu angeordnet ist, in beide Richtungen drehbar zu sein.

4. Vorrichtung (1) nach einem der vorhergehenden Ansprüche,
**dadurch gekennzeichnet, dass** eine elektronische Einheit (10) dazu angeordnet ist, das Signal (S) von dem Start/Stopp-Schalter (1) zu erfassen und daraufhin die Energiemanagementeinheit (11) zu steuern.

5. Vorrichtung (1) nach einem der vorhergehenden Ansprüche,
**dadurch gekennzeichnet, dass** die elektronische Einheit (10) das elektronische Steuergerät des Fahrzeugs ist.

6. Vorrichtung (1) nach einem der vorhergehenden Ansprüche,
**dadurch gekennzeichnet, dass** der Knopf (2) unter Federvorspannung steht.

7. Vorrichtung (1) nach einem der vorhergehenden Ansprüche,
**dadurch gekennzeichnet, dass** der Strom zum Motor über die dritte Stromversorgungseinheit (14) und ein Starterrelais (15) gesteuert ist.

8. Vorrichtung (1) nach einem der vorhergehenden Ansprüche,
**dadurch gekennzeichnet, dass** die elektronische Einheit (4) dazu angeordnet ist, das Signal (S) mittels optoelektronischer Komponenten zu erzeugen.

9. Vorrichtung (1) nach einem der vorhergehenden Ansprüche,
**dadurch gekennzeichnet, dass** das Signal (S) aus Pulsen besteht.

10. Fahrzeug, **dadurch gekennzeichnet, dass** es mit einer Start/Stopp-Schaltvorrichtung (1) nach einem der Ansprüche 1 bis 9 ausgerüstet ist.

## Revendications

1. Dispositif interrupteur de démarrage/d'arrêt (1) permettant d'alimenter/de contrôler un système électronique et le moteur dans un véhicule, comprenant :
- un bouton-poussoir central (2) permettant d'alimenter et de démarrer le moteur du véhicule par le contrôle d'une troisième unité d'alimentation (14), lorsqu'il est poussé, et
- un anneau externe substantiellement circulaire et rotatif (3), dans lequel l'anneau (3), lorsqu'il est tourné, est agencé pour générer un signal électronique (S) dans l'interrupteur de démarrage/d'arrêt (1), le signal (S) étant agencé pour contrôler le système électronique (5) comprenant une unité de gestion de l'alimentation (11) agencée pour alimenter différentes unités d'alimentation (12, 13, 14) du véhicule, l'interrupteur étant (1) **caractérisé par**
une unité électronique (4), intégrée dans l'interrupteur de démarrage/d'arrêt (1), agencée pour générer le signal (S) lorsque l'anneau (3) est tourné, le signal (S) agencé pour indiquer l'angle de rotation que l'anneau est tourné, et dans laquelle ledit signal (S) qui indique un premier angle de rotation prédéterminé est agencé pour alimenter une première unité d'alimentation (12) destinée à contrôler l'alimentation de la radio, le « R-système », et lorsque ledit signal (S) indique un deuxième angle de rotation prédéterminé, il est agencé pour alimenter une deuxième unité d'alimentation (13) dans le but de contrôler l'alimentation à au moins un autre système électrique dans le véhicule, le « 15-système ».

2. Dispositif (1) selon la revendication 1,
**caractérisé en ce**
**que** l'anneau (3) est agencé de façon indéfiniment rotative.

3. Dispositif (1) selon la revendication 1 ou 2,
**caractérisé en ce**
**que** l'anneau (3) est agencé de manière rotative dans les deux sens.

4. Dispositif (1) selon l'une quelconque des revendications précédentes,
**caractérisé en ce**
**qu'**une unité électronique (10) est agencée pour détecter le signal (S) depuis l'interrupteur de démarrage/d'arrêt (1) et à son tour contrôler l'unité de gestion de l'alimentation (11).

5. Dispositif (1) selon l'une quelconque des revendications précédentes,
**caractérisé en ce**
**que** l'unité électronique (10) est l'ECU du véhicule.

6. Dispositif (1) selon l'une quelconque des revendications précédentes,
**caractérisé en ce**
**que** le bouton (2) est sollicité par ressort.

7. Dispositif (1) selon l'une quelconque des revendications précédentes,
**caractérisé en ce**
**que** l'alimentation du moteur est contrôlée via la troisième unité d'alimentation (14) et un relais de démarrage (15).

8. Dispositif (1) selon l'une quelconque des revendications précédentes,
**caractérisé en ce**
**que** l'unité électronique (4) est agencée pour générer le signal (S) au moyen de composants optoélectroniques.

9. Dispositif (1) selon l'une quelconque des revendications précédentes,
**caractérisé en ce**
**que** le signal (S) comprend des impulsions.

10. Véhicule **caractérisé en ce qu'**il est équipé d'un dispositif interrupteur de démarrage/d'arrêt (1) selon l'une quelconque des revendications 1 à 9.
